**Europäisches Patentamt**

**European Patent Office**

**Office européen des brevets**

(11) Numéro de publication : **0 319 540 B1**

(12) **FASCICULE DE BREVET EUROPEEN**

(19)

(45) Date de publication du fascicule du brevet :
**10.06.92 Bulletin 92/24**

(21) Numéro de dépôt : **87905457.5**

(22) Date de dépôt : **25.08.87**

(86) Numéro de dépôt international :
**PCT/FR87/00329**

(87) Numéro de publication internationale :
**WO 88/01699 10.03.88 Gazette 88/06**

(51) Int. Cl.⁵ : **F16B 12/32, E04B 1/19**

(54) **NOEUD D'ASSEMBLAGE MODULAIRE POUR ELEMENTS PROFILES.**

(30) Priorité : **28.08.86 FR 8612269**

(43) Date de publication de la demande :
**14.06.89 Bulletin 89/24**

(45) Mention de la délivrance du brevet :
**10.06.92 Bulletin 92/24**

(84) Etats contractants désignés :
**AT BE CH DE FR GB IT LI LU NL SE**

(56) Documents cités :
**FR-A- 2 132 651**
**FR-A- 2 238 857**
**FR-A- 2 526 520**
**GB-A- 1 283 025**
**US-A- 3 270 478**
**US-A- 4 145 149**

(73) Titulaire : **MECAFABLON**
**Zac de Rogerville-Oudalle**
**F-76430 Oudalle (FR)**

(72) Inventeur : **Cure, Alain**
**1, rue de la Maison Rouge, Auménancourt**
**F-51220 Hermonville (FR)**
Inventeur : **Gélin, Patrick**
**20, Groupe Eisenhower**
**F-51100 Reims (FR)**

(74) Mandataire : **Ecrepont, Robert**
**Cabinet Ecrepont 12 Place Simon Vollant**
**F-59800 Lille (FR)**

## Description

La présente invention concerne un noeud d'assemblage modulaire pour éléments profilés.

Il est connu d'utiliser des noeuds d'assemblage spéciaux pour assurer le raccordement rapide et démontable, dans diverses directions, d'éléments profilés, entrant généralement dans la constitution de rayonnages, de présentoirs et de structures spéciales servant, en particulier, à l'agencement de bureaux ou de magasins.

De tels noeuds d'assemblage sont décrits dans les brevets français FR-A-2.216.848, 2.200.913, 2.203.451, 2.562.173 et 2.160.038. Toutefois, ces noeuds d'assemblage sont généralement destinés à la liaison de profilés tubulaires de section carrée, rectangulaire ou ronde : ce qui limite leur utilisation à l'assemblage, par les extrémités, de cette catégorie particulière de profilés, ou, lorsqu'ils permettent l'assemblage transversal, d'exiger l'emploi de profilés ou d'organes d'assemblage spéciaux. De plus, ces noeuds d'assemblage ne se prêtent pas à la constitution d'ensembles complexes.

On connaît déjà des dispositifs correspondant au préambule de la revendication 1 (US-A-3.270.478 et US-A-4.145.149). Ces dispositifs, constitués respectivement d'un ou de deux éléments plats reliés entre eux, comportent des ailes sur lesquelles se fixent des profilés tubulaires ou en ⊥⌐ , par l'intermédiaire de boulons.

Ces dispositifs ne comportent aucun moyen permettant d'indexer les profilés selon différents angles, ni de positionnement de l'ensemble par rapport à une autre structure réalisée elle-même à partir d'éléments profilés assemblés ou non par les mêmes moyens.

La présente invention a pour but de remédier à ces inconvénients. Cette invention, telle qu'elle est caractérisée dans les revendications, résout le problème consistant à créer un noeud d'assemblage modulaire de profilés de diverses sections : notamment de profilés en C, en H, en U ou en X, dont l'extrémité des ailes est rabattue vers l'intérieur, correspondant à des produits standards du commerce. L'assemblage s'effectuant en un point quelconque de ceux-ci, en utilisant un moyen de serrage classique par vis et écrou, se prêtant aux réglages en position du noeud d'assemblage, au coulissement de celui-ci par rapport à un élément profilé et à la constitution de noeuds d'assemblage plus complexes.

Le noeud d'assemblage modulaire selon l'invention, se caractérise principalement en ce qu'il est constitué, pour l'essentiel, d'un élément creux et plat, de contour semi-polygonal, ouvert à sa base, comportant, sur chacune de ses faces pleines, une ou plusieurs protubérances ou évidements de section carrée, percés en leur milieu, d'entretoises percées de forme carrée ou ronde, destinées à prendre place dans les évidements, et de boulons.

Selon un mode de réalisation préférentiel de l'invention, le contour de l'élément creux est semi-octogonal, afin de permettre l'assemblage à 90° de profilés.

La hauteur des protubérances est un peu inférieure à l'épaisseur des ailes des profilés afin d'obtenir, lors de l'assemblage par boulonnage, une immobilisation par serrage des profilés par rapport au noeud d'assemblage.

L'épaisseur des entretoises de forme carrée est un peu inférieure à la profondeur des évidements augmentée de l'épaisseur des ailes des profilés ; afin d'obtenir, comme dans le montage évoqué ci-dessus, une immobilisation par serrage des profilés par rapport au noeud d'assemblage.

L'épaisseur des entretoises de forme carrée est, selon un second mode de réalisation, un peu supérieure à la profondeur des évidements augmentée de l'épaisseur des profilés ; afin d'obtenir une liberté de translation des noeuds d'assemblage par rapport aux profilés.

L'épaisseur des entretoises de forme circulaire est, selon un premier mode de réalisation, un peu supérieure à la profondeur des évidements augmentée de l'épaisseur des ailes des profilés, afin d'obtenir, pour certains cas d'utilisation, une liberté en rotation et en translation des noeuds d'assemblage par rapport aux profilés et vice versa.

L'épaisseur des entretoises de forme circulaire est, selon un second mode de réalisation, un peu inférieure à la profondeur des évidements augmentée de l'épaisseur des ailes des profilés; afin d'obtenir, pour certains cas d'utilisation, une orientation particulière des profilés par rapport aux noeuds d'assemblage avant immobilisation par serrage par rapport à ceux-ci.

L'écrou qui équipe les boulons d'assemblage est, selon un premier mode de réalisation, correspondant à une solidarisation des noeuds par rapport aux profilés, constitué d'une barrette rectangulaire, de largeur inférieure à celle de la rainure des profilés et de diagonale un peu supérieure à l'écartement des ailes des profilés ; afin de permettre une mise en place du noeud d'assemblage en un point quelconque des profilés, par introduction en long de la barrette dans la rainure puis pivotement de celle-ci à 45° avant solidarisation par serrage.

L'écrou qui équipe les boulons d'assemblage est, selon un second mode de réalisation, correspondant à une liberté en translation et en rotation des noeuds par rapport aux profilés, constitué d'une rondelle filetée intérieurement aux dimensions de la vis, dont le diamètre est un peu inférieur à l'écartement des ailes des profilés afin d'obtenir, en combinaison avec l'entretoise de forme circulaire correspondant au premier mode de réalisation de celle-ci, une liberté en position et en rotation des noeuds d'assemblage par rapport aux profilés. Cet écrou peut être, dans ce cas, vissé avec interposition d'une rondelle en matière antifriction ou réalisé dans une telle matière afin de réduire le frottement et l'usure.

Plusieurs noeuds d'assemblage peuvent être, compte-tenu de leur conception modulaire, assemblés pour constituer des noeuds plus complexes, rigides ou articulés, selon que les entretoises d'assemblage utilisées sont carrées ou rondes, épaisses ou minces.

Les avantages obtenus, grâce à cette invention, consistent essentiellement en ceci, que cet élément modulaire se prête à la réalisation d'assemblages simples ou complexes, fixes ou mobiles, de profilés de diverses sections entre eux ou avec d'autres pièces par rapport à des profilés, dans des domaines d'application très divers et très vastes, avec une grande facilité de montage et une grande souplesse d'emploi.

D'autres caractéristiques et avantages apparaîtront dans la description qui va suivre de différents modes d'assemblage de profilés en C par l'intermédiaire de noeuds d'assemblage, simples ou complexes, réalisés selon l'invention, donnés à titre d'exemples non limitatifs au regard des dessins annexés sur lesquels :

– la figure 1, représente une vue en élévation et en coupe d'un élément d'assemblage modulaire de contour semi-octogonal.

– la figure 2, représente une vue de dessus d'un élément d'assemblage modulaire de contour semi-octogonal.

– la figure 3, représente une vue en élévation et en coupe de l'assemblage à 90° de trois profilés en C par l'intermédiaire d'un noeud d'assemblage modulaire.

– la figure 4, représente une vue en élévation et en coupe d'un assemblage à 90° de quatre profilés en C par l'intermédiaire d'un noeud d'assemblage complexe réalisé à partir de deux éléments modulaires combinés.

– la figure 5, représente une vue en élévation et en coupe partielle de l'assemblage de sept profilés en C par l'intermédiaire d'un noeud d'assemblage complexe constitué de trois éléments modulaires combinés.

– la figure 6, représente une vue en élévation et en coupe d'un élément d'assemblage modulaire à contour semi polygonal à cinq pans.

Les figures représentent l'assemblage de profilés 1 par l'intermédiaire de noeuds d'assemblage modulaires constitués d'éléments creux 2, à contour semi polygonal, comportant des protubérances 2a et des évidements 2b, d'entretoises 3, de vis 4 et d'écrous en forme de barrette 5.

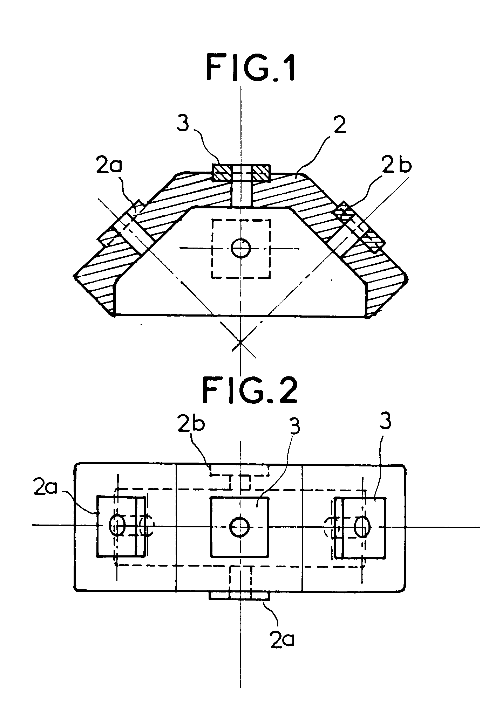

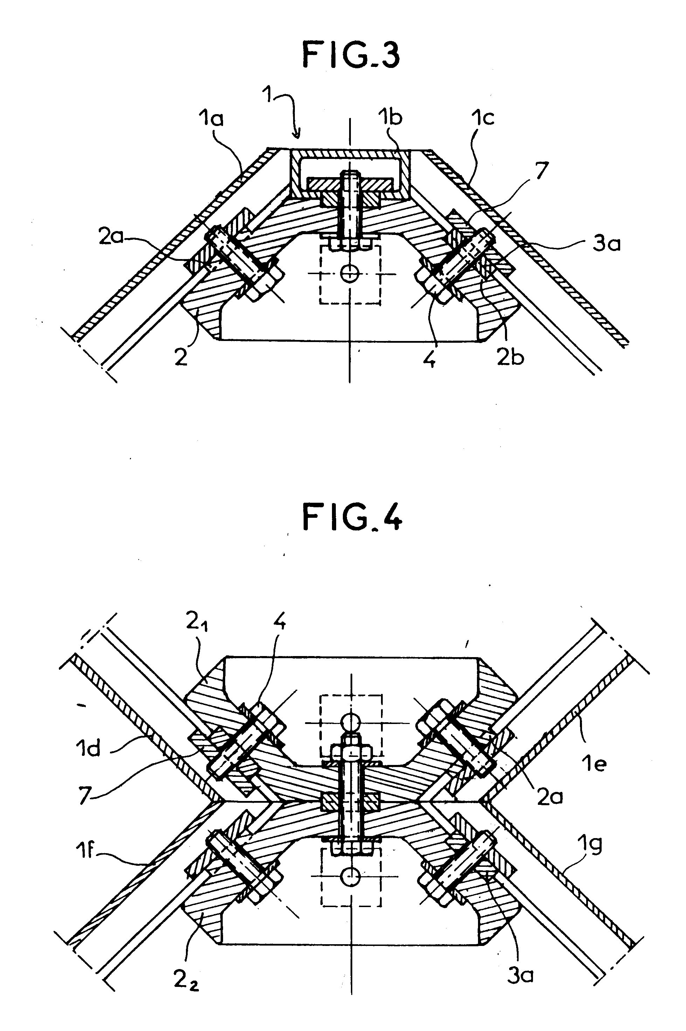

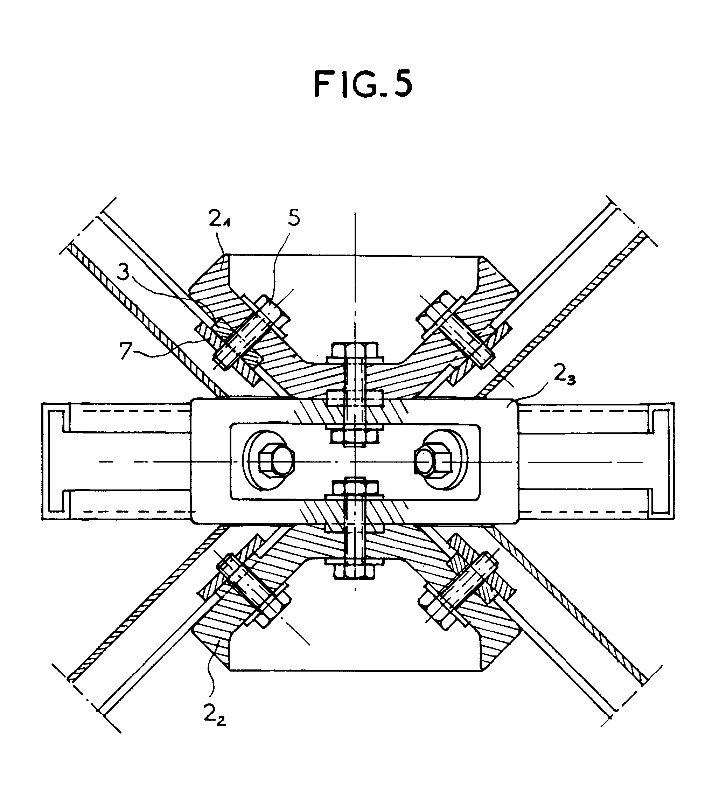

En examinant les figures 1 et 2, on remarque que le noeud d'assemblage modulaire est constitué d'un élément creux à contour semi-octogonal 2, qui comporte, sur l'un de ses pans, une protubérance percée 2a, sur ses autres pans des évidements percés 2b, dans lesquels viennent se loger des entretoises percées 3, et, sur ses côtés, respectivement une protubérance percée 2a et un évidement percé 2b. Les entretoises 3 peuvent être carrées ou rondes, selon que l'on désire obtenir l'alignement permanent du noeud par rapport au profilé ou, au contraire, une liberté de positionnement angulaire par rapport à celui-ci. Cette entretoise, quelle que soit sa forme, sera mince ou épaisse, selon que l'on désirera immobiliser le noeud par serrage dans une position déterminée par rapport au profilé ou, au contraire, libérer celui-ci en translation ou/et en rotation par rapport au dit profilé. Il est aussi possible, par ce moyen, de réaliser des noeuds d'assemblage complexes en combinant plusieurs noeuds modulaires de façon rigide ou articulée, selon que l'on aura interposé entre eux des entretoises carrées ou rondes. Par ailleurs, deux éléments modulaires creux pourront être juxtaposés , avec concordance de leur orientation, en introduisant la protubérance située sur l'un des côtés de l'un dans l'évidement situé dans l'autre côté de l'autre ou, avec une orientation différente, en appliquant les côtés munis d'un évidement l'un contre l'autre avec interposition d'une entretoise ronde. Les deux modules, ainsi assemblés, pourront être libres en rotation l'un par rapport à l'autre, dans la mesure ou l'épaisseur de l'entretoise ronde représentera plus de deux fois la profondeur de l'évidement 2b. Dans certains cas d'application, cette entretoise pourra être remplacée par une butée à billes ou par une rondelle auto-lubrifiante. Les mêmes posssibilités existent bien sûr, pour d'autres formes d'assemblages complexes, tels que ceux représentés aux figures 4 et 5, par exemple.

En examinant la figure 3, on remarque que, par l'intermédiaire d'un seul élément d'assemblage modulaire, il est possible d'obtenir le raccordement à 90° de trois profilés en C 1a, 1b et 1c. Dans ce cas, puisque la rigidité de l'assemblage est tout particulièrement recherchée, les entretoises 3a seront choisies carrées et minces, afin d'obtenir indexation et serrage, et l'écrou 7 sera choisi de préférence rond puisque, dans cet exemple, il sera introduit dans le creux des profilés par l'une des extrémités de ceux-ci.

En examinant la figure 4, on remarque que, par l'intermédiaire de deux éléments d'assemblage modulaire $2_1$ et $2_2$, il est possible de relier, au minimum, quatre profilés 1d, 1e, 1f et 1g, étant entendu que d'autres pourraient aussi être fixés contre les côtés des éléments $2_1$ et $2_2$ en utilisant la protubérance 2a ou les évidements 2b existant sur ceuxci. Cette rigidité pourra être obtenue dans un même plan ou dans des plans différents, selon que l'on aura, comme expliqué pour les figures 1 et 2 interposé entre les éléments $2_1$ et $2_2$ une entretoise carrée ou ronde. Une liberté permanente d'orientation pourra même être obtenue d'un plan par rapport à l'autre,dans la mesure ou, comme il a déjà été expliqué, l'entretoise ronde aura été choisie en conséquence (rondelle autolubrifiante ou butée à billes).

En examinant la figure 5, on remarquera qu'un noeud assemblage complexe permettant le raccordememt d'au moins six profilés en C pourra être obtenu en combinant au moins trois éléments $2_1$, $2_2$ et $2_3$. Etant entendu qu'un noeud encore plus complexe pourra être obtenu en reliant entre eux , par le sommet des éléments $2_3$, deux ensembles complexes de ce type. Comme dans l'exemple de montage exposé au paragraphe ci-dessus, illustré par la figure 4, les éléments $2_1$, $2_2$ et $2_3$ pourront être rendus libres en rotation l'un par rapport à l'autre ou solidaires entre eux, selon des orientations particulières, en fonction des entretoises utilisées.

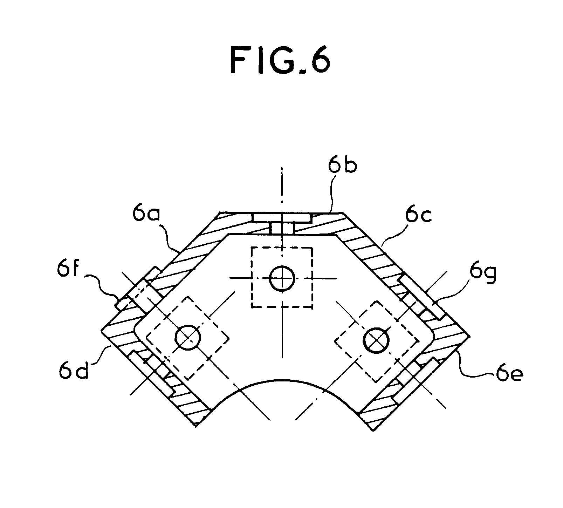

En examinant la figure 6, on remarquera que ce noeud d'assemblage modulaire pourra selon un autre mode de réalisation comporter un élément creux 6 à contour polygonal à 5 pans constitué de trois pans 6a, 6b et 6c, inclinés à 45° l'un par rapport à l'autre, prolongé, sur les côtés par des pans 6d et 6e formant un angle de 90° avec le précédent. Comme sur l'élément semi-octogonal à trois pans précédemment décrit, ces pans sont munis de protubérance 6f ou d'évidement 6g percés, ainsi que les côtés qui,compte-tenu de leur configuration,sont munis chacun de trois protubérances ou évidements percés. Cet élément modulaire se prête à des assemblages et à la réalisation de noeuds encore plus complexes qu'avec le noeud à trois pans précédemment décrit. Il va de soi que d'rautres contours semi-polygonaux que ceux déjà indiqués à titre d'exemple, pourraient être adaptés,selon les applications,sans sortir du cadre de la présente invention.

Ce noeud d'assemblage élémentaire peut être combiné avec un autre élément de même caractéristique pour obtenir la réalisation en une seule pièce de deux éléments creux disposés à 90° l'un de l'autre.

Le noeud d'assemblage modulaire selon l'invention se prête à la réalisation de meubles, de cloisons et de panneaux, fixes, coulissants ou orientables, à la réalisation d'étagères, d'armatures de casiers de classement etc..., pour ne citer que le domaine de l'aménagement intérieur de locaux. Il peut être aussi utilisé dans l'industrie pour réaliser des ossatures de machines ou des supports d'équipement et dans d'autres domaines pour constituer des éléments de jeux de construction pour enfants, des maquettes pour adultes, etc..., selon les dimensions et la matière choisies.

## Revendications

1. Noeud d'assemblage modulaire d'éléments profilés (1) caractérisé en ce qu'il est constitué essentiellement d'un élément creux de contour semi-polygonal (2 ou 6) ouvert à sa base, comportant sur chacune de ses faces une ou plusieurs protubérances (2a) ou évidements (2b) de section carrée percés en leur milieu, d'entretoises percées (3) de forme carrée ou ronde, destinées à prendre place dans les évidements, et de boulons constitués d'une vis (4) et d'un écrou.

2. Noeud d'assemblage modulaire selon la revendication 1, caractérisé en ce que l'élément creux (2) est de contour semi-octogonal à trois pans.

3. Noeud d'assemblage modulaire selon la revendication 1, caractérisé en ce que l'élément creux (6) est de contour polygonal à cinq pans constitué de trois pans inclinés à 45° l'un par rapport à l'autre, prolongés, de chaque côté, par un pan incliné à 90° par rapport au précédent.

4. Noeud d'assemblage modulaire selon la revendication 1, caractérisé en ce que la hauteur des protubérances (2a) est un peu inférieure à l'épaisseur des ailes de profilés (1).

5. Noeud d'assemblage modulaire selon la revendication 1, caractérisé en ce que les entretoises (3) ont une épaisseur un peu inférieure à la profondeur des évidements (2b) augmentée de l'épaisseur des ailes des profilés (1).

6. Noeud d'assemblage modulaire selon la revendication 1, caractérisé en ce que les entretoises (3) ont une épaisseur un peu supérieure à la profondeur des évidements (2b) augmentée de l'épaisseur des ailes des profilés (1).

7. Noeud d'assemblage modulaire selon la revendication 1, caractérisé en ce que l'écrou des boulons d'assemblage est constitué d'une barrette rectangulaire (5) de largeur inférieure à celle de la rainure des profilés (1) et de diagonale supérieure à l'écartement des ailes des profilés.

8. Noeud d'assemblage modulaire selon la revendication 1, caractérisé en ce que l'écrou des boulons d'assemblage est constitué d'une rondelle, filetée intérieurement, dont le diamètre est un peu inférieur à l'écartement des ailes des profilés (1).

9. Noeud d'assemblage modulaire selon la revendication 1, caractérisé en ce qu'il peut être combiné avec un autre élément de même caractéristique pour obtenir la réalisation en une seule pièce de deux éléments creux disposés à 90° l'un de l'autre.

## Claims

1. Modular assembly node of sectional elements (1) characterized in that it is basically constituted of a hollow element of semi-polygonal contour (2 or 6), open at its base, containing on each of its faces one or several protuberances (2a) or recesses (2b) of square cross-section drilled in their middle, drilled struts (3) of square or round shape, designed to be placed in the recesses, and bolts constituted of a screw (4) and a nut.

2. Modular assembly node according to claim 1, characterized in that the hollow element (2) is of semi-octagonal, three-sides contour

3. Modular assembly node according to claim 1, characterized in that the hollow element (6) has a five-sided polygonal contour, constituted of three sides inclined 45° to each other, prolonged, on each face, by a side inclined 90° to the previous one.

4. Modular assembly node according to claim 1, characterized in that the height of the protuberances (2a) is slightly less than the thickness of the section flanges (1).

5. Modular assembly node according to claim 1, characterized in that the struts (3) have a thickness slightly less than the depth of the recesses (2b) increased by the thickness of the section flanges (1).

6. Modular assembly node according to claim 1, characterized in that the struts (3) have a thickness slightly more than the depth of the recesses (2b) increased by the thickness of the section flanges (1).

7. Modular assembly node according to claim 1, characterized in that the nut of the assembly bolts consists of a rectangular bar (5) whose width is less than that of the groove in the sections (1) and whose diagonal is greater than the spacing between the section flanges.

8. Modular assembly node according to claim 1, characterized in that the nut of the assembly bolts consists of a washer, threaded inside, whose diameter is slightly less than the spacing between the section flanges (1).

9. Modular assembly node according to claim 1, characterized in that it can be combined with another element with the same characteristics to obtain a single part of two hollow elements arranged 90° to each other.

**Patentansprüche**

1. Zusammensetzbarer Verbindungsknoten von profilierten Elementen (1), **dadurch gekennzeichnet**, daß er im wesentlichen aus einem hohlen Element von halbpolygonaler Kontur (2 oder 6), das an seiner Basis offen ist, wobei es an jedem seiner Seiten eine oder mehrere Vorsprünge (2a) oder Ausnehmungen (2b) von viereckiger Form aufweist, die in ihrer Mitte durchbohrt sind, aus durchbohrten Abstandshülsen (3) von viereckiger oder runder Form, die dazu bestimmt sind, in den Ausnehmungen zu liegen zu kommen, und aus Bolzen gebildet sind, die von einer Schraube (4) und einer Mutter gebildet werden.

2. Zusammensetzbarer Verbindungsknoten nach Anspruch 1, **dadurch gekennzeichnet**, daß das hohle Element (2) von halboktogonaler Kontur mit drei Seiten ist.

3. Zusammensetzbarer Verbindungsknoten nach Anspruch 1, **dadurch gekennzeichnet**, daß das hohle Element (6) von polygonaler Kontur mit fünf Seiten ist, gebildet aus drei um 45° zueinander geneigten Seiten, die auf jeder Seite durch eine um 90° bezüglich der vorhergehenden Seite geneigte Seite verlängert sind.

4. Zusammensetzbarer Verbindungsknoten nach Anspruch 1, **dadurch gekennzeichnet**, daß die Höhe der Vorsprünge (2a) etwas geringer ist als die Dicke der Schenkel der Profile (1).

5. Zusammensetzbarer Verbindungsknoten nach Anspruch 1, **dadurch gekennzeichnet**, daß die Abstandshülsen (3) eine Dicke aufweisen, die etwas geringer ist als die Tiefe der Ausnehmungen (2b), vergrößert um die Dicke der Schenkel der Profile (1).

6. Zusammensetzbarer Verbindungsknoten nach Anspruch 1, **dadurch gekennzeichnet,** daß die Abstandshülsen (3) eine Dicke aufweisen, die etwas größer ist als die Tiefe der Ausnehmungen (2b), erhöht um die Dicke der Schenkel der Profile (1).

7. Zusammensetzbarer Verbindungsknoten nach Anspruch 1, **dadurch gekennzeichnet**, daß die Mutter der Verbindungsbolzen gebildet ist aus einem rechteckigen Steg (5) von einer Breite, geringer als jene der Kerbe der Profile (1) und einer Diagonale, größer als der Abstand der Schenkel der Profile.

8. Zusammensetzbarer Verbindungsknoten nach Anspruch 1, **dadurch gekennzeichnet**, daß die Mutter der Verbindungsbolzen gebildet ist aus einem im Inneren mit einem Gewinde versehenen Rad, dessen Durchmesser etwas geringer ist als der Abstand der Schenkel der Profile (1).

9. Zusammensetzbarer Verbindungsknoten nach Anspruch 1, **dadurch gekennzeichnet**, daß er mit einem anderen Element mit gleichen Eigenschaften kombiniert werden kann, um ein einziges Teil aus zwei hohlen, um 90° zueinander angeordneten, Elementen zu erhalten.

# FIG.1

# FIG.2

# FIG.3

# FIG.4

# FIG.5

# FIG.6